# EUROPÄISCHE PATENTSCHRIFT

(11) **EP 2 623 174 B1**
(45) Veröffentlichungstag und Bekanntmachung des Hinweises auf die Patenterteilung: **28.09.2016**
(21) Anmeldenummer: 13153599.9
(22) Anmeldetag: 01.02.2013
(51) Int. Cl.: B01D 17/02, C02F 1/40

(54) **ABSCHEIDER**
PRECIPITATOR
SÉPARATEUR

(30) Priorität: 02.02.2012 DE 102012100863
(43) Veröffentlichungstag der Anmeldung: 07.08.2013
(73) Patentinhaber: ACO Severin Ahlmann GmbH & Co. KG, 24782 Büdelsdorf (DE)
(72) Erfinder: Schmitz, Marc, 68239 Mannheim (DE); Grube, Stefan, 68642 Bürstadt (DE)
(74) Vertreter: Bohnenberger, Johannes

(56) Entgegenhaltungen:
- DE-C2- 2 715 049
- GB-A- 680 244
- GB-A- 1 531 807
- US-A- 3 894 943
- US-A- 4 643 834

## Beschreibung

Die Erfindung betrifft einen Abscheider zum Abtrennen von Leichtflüssigkeit aus einem Öl, Wasser und ggf. Schlamm enthaltenden Gemisch nach Anspruch 1.

Zum Abscheiden von Leichtflüssigkeiten, wie Öl, Benzin, Benzol oder dergleichen aus Wasser sowie zum Abscheiden von Schlamm ist es bekannt, in Längsrichtung durchströmte Strömungsbehälter zu verwenden, so dass die Leichtflüssigkeitströpfchen im Verlauf ihres Weges von einem Einlauf zu einem Auslauf hochsteigen können und sich dann auf dem Wasser an der Oberfläche ansammeln. Die Abscheideleistung derartiger Abscheider ist begrenzt.

Eine Vorrichtung der hier angesprochenen Art ist aus der DE 198 50 320 A1, der DE 2 164 477 A und der DE 296 16 832 U1 bekannt.

Aus der DE 27 15 049 C2 ist ein Leichtflüssigkeitsabscheider bekannt, der eine Vielzahl von parallelen Platten aufweist, die in Strömungsrichtung angeordnet sind. Die Platten haben einen Abstand von nur wenigen Zentimetern (in der Druckschrift werden maximal etwa 5 cm angegeben), so dass die Wahrscheinlichkeit, dass Leichtflüssigkeitsteilchen mit der Plattenoberfläche in Berührung kommen, relativ groß ist. Vorzugsweise sind die Platten mit oleophilen Werkstoffen beschichtet, so dass die Leichtflüssigkeitsteilchen an den Plattenoberflächen anhaften, sich miteinander verbinden bzw. zusammenlagern und dann nach oben steigen. Derartige Abscheider sind außerordentlich aufwändig zu reinigen, da die einzelnen Platten jeweils über ihre gesamte Oberfläche hin gereinigt werden müssen, um eine optimale Abscheidungswirkung zu erzielen. Darüber hinaus sind die Abscheider aufwändig in ihrer Konstruktion und Montage.

Die GB 680 244 A zeigt einen weiteren vorbekannten Leichtflüssigkeitsabscheider.

Der Erfindung liegt die Aufgabe zu Grunde, einen Abscheider zum Abtrennen von Leichtflüssigkeit aufzuzeigen, der bei einfacher Konstruktion und hoher Abscheidungsleistung einen relativ geringen Instandhaltungsaufwand aufweist.

Diese Aufgabe wird durch einen Abscheider nach Patentanspruch 1 gelöst.

Überraschenderweise hat es sich gezeigt, dass diese gegenüber dem oben genannten Stand der Technik ungewöhnliche Dimensionierung dazu führt, dass eine erhebliche Vergleichmäßigung der Strömung innerhalb des Strömungsbehälters und zwar über dessen im Wesentlichen gesamte Länge hin erzielt wird, was zu hohen Abscheideleistungen führt. Darüber hinaus werden nur sehr wenige - eben nur zwei oder drei - Leitwände benötigt, so dass die Wartung des Abscheiders sich einfach gestaltet. Der Aufwand zur Herstellung des Abscheiders ist relativ gering.

Die Breite aller Kanäle wird gleich groß gewählt. Dadurch ergibt sich eine weitere Vergleichmäßigung der Abscheideleistung über die gesamte Breite des Strömungsbehälters hin.

Vorzugsweise beträgt die Breite 60 bis 80 cm, besonders vorzugsweise 65 bis 75 cm. Diese Dimensionierung führt zu überraschend guten Ergebnissen.

Vorzugsweise umfasst der Strömungsbehälter im Bereich des Einlaufes eine Tauchwand, die den Strömungsbehälter durchquert und unter ihrem Unterrand einen Durchlassschlitz zu einem Bodenströmungsbehälter definiert, der das Gemisch mit im Wesentlichen gleicher Strömungsgeschwindigkeit in die drei Kanäle leitet. Auch hier wieder wird eine besonders gute Vergleichmäßigung der Strömungsgeschwindigkeiten und damit eine besonders hohe Abscheideleistung erzielt.

Die Tauchwand ist 50 bis 90 cm, vorzugsweise 60 bis 80 cm, insbesondere aber 65 bis 75 cm von einer Vorderwand des Strömungsbehälters entfernt angeordnet. Dieser recht kurze "Strömungsverteilungsraum" genügt überraschenderweise, um das gewünschte Ergebnis zu erzielen.

Die Länge der Leitwände in Strömungsrichtung gesehen beträgt vorzugsweise 180 bis 260 cm, vorzugsweise 200 bis 240 cm und insbesondere 210 bis 230 cm. Dieses Maß ist vom Aufwand der Herstellung des Behälters her noch vertretbar und führt zu hinreichend guten Abscheideleistungen.

Die Länge des gesamten Strömungsbehälters beträgt etwa 420 bis 520 cm, vorzugsweise 450 bis 490 cm, und besonders vorzugsweise 460 bis 480 cm, so dass am Ende der durch die Leitwände gebildeten Strömungskanäle hinreichend Raum verbleibt, um die Flüssigkeit zu einem gleichmäßigen Strom vereint abzuleiten.

Bei besonders hohen Strömungsgeschwindigkeiten ist es von Vorteil, wenn quer zur Strömungsrichtung angeordnete Lochplatten in den Kanälen vorgesehen werden. Diese verbessern die Abscheidewirkung.

In der nachfolgenden Beschreibung werden bevorzugte Ausführungsformen anhand von Abbildungen näher erläutert. Hierbei zeigen
- Fig. 1: eine Draufsicht auf einen Abscheider in schematisierter Ansicht,
- Fig. 2: eine weitere Ausführungsform des Abscheiders nach Fig. 1 und
- Fig. 3: einen schematisierten Längsschnitt durch einen Abscheider nach Fig. 2.

In der nachfolgenden Beschreibung werden für gleiche und gleich wirkende Teile dieselben Bezugsziffern verwendet.

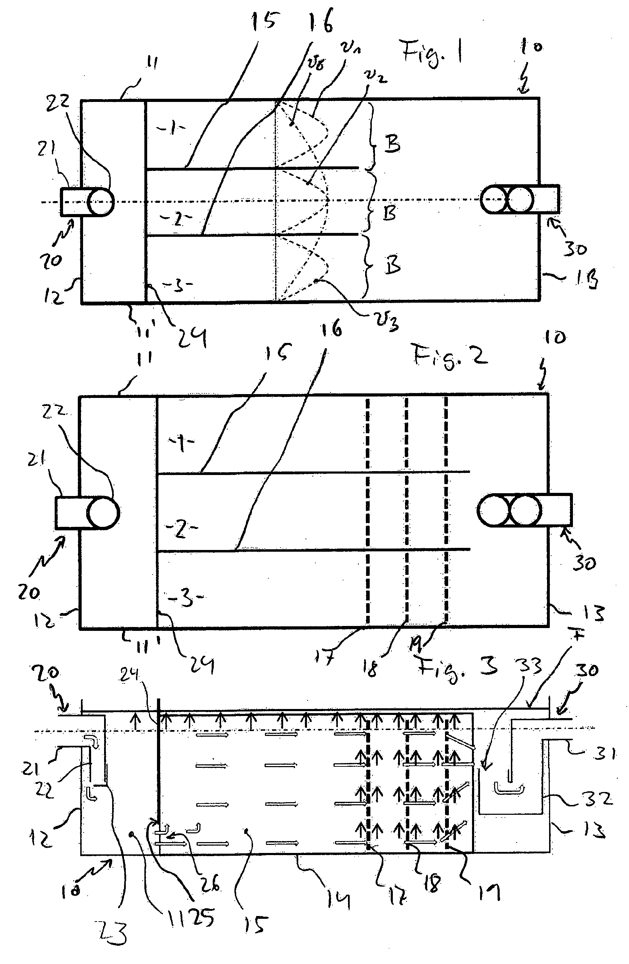

In den Abbildungen ist mit der Bezugsziffer 10 ein Strömungsbehälter bezeichnet, der Seitenwände 11, 11', eine Vorderwand 12, eine Rückwand 13 und einen Boden 14 (siehe Fig. 3) aufweist.

Der Strömungsbehälter 10 ist in seiner Grundrichtung durch Leitwände 15 und 16 so unterteilt, dass sich drei Kanäle 1, 2 und 3 bilden.

Ein Einlauf 20 weist eine Zuleitung 21 auf, die in eine Tauchleitung 22 mündet, welche ein einlaufendes Leichtflüssigkeit und Wasser sowie Schlamm aufweisendes Gemisch nach unten leitet, wobei am unteren Ende der Tauchleitung 22 ein Prallblech 23 vorgesehen sein kann, welches die einlaufende Flüssigkeit verteilt.

Weiterhin ist eine Tauchwand 24 vorgesehen, die nach unten, quer zur Strömungsrichtung ragt und mit ihrem Unterrand 25 einen Durchlassschlitz 26 zwischen dem Unterrand 25 und dem Boden 14 des Strömungsbehälters definiert, so dass einlaufende Flüssigkeit zunächst in den Raum zwischen der Vorderwand 12, den Seitenwänden 11 und 11' sowie der Tauchwand 24 strömt und dann in einem relativ gleichmäßigen Strom durch den Durchlassschlitz 26 in die Strömungskanäle 1, 2 und 3 einströmt.

Die Strömungskanäle 1, 2 und 3 weisen gleiche Breiten B auf. In Fig. 1 sind schematisch die relativen Geschwindigkeiten eingezeichnet, die sich bei Aufteilung des Strömungsbehälters in drei Kanäle 1, 2 und 3 ergeben, nämlich die Geschwindigkeiten v₁, v₂ und v₃.

Weiterhin ist in Fig. 1 eine Strömungsgeschwindigkeit v₀ gezeigt, die sich dann ergäbe, wenn die Leitwände 15 und 16 nicht vorhanden wären. Aus der Abbildung ergibt sich, dass (wie an sich natürlich bekannt) die Strömungsgeschwindigkeit vom Rand eines Kanales zu dessen Mitte hin ansteigt und dann wieder zum anderen Rand hin abfällt. Dieses "Muster" gilt unabhängig von der Breite der Kanäle. Wichtig hierbei ist aber die Tatsache, dass dann, wenn die Leitwände nicht vorhanden wären, die Strömungsgeschwindigkeit im mittleren Bereich der Strömung, der durch die Breite B des mittleren Kanals 2 definiert ist, im Mittel sehr viel höher ist als die mittlere Strömungsgeschwindigkeit der Gesamtströmung (ohne Leitwände 15, 16) in den durch die randseitigen Kanäle 1 und 3 bestimmten Bereichen. Genauer gesagt ist die Geschwindigkeit v₀ im Durchschnitt im mittleren Bereich fast doppelt so groß wie die Durchschnittsgeschwindigkeit der Strömung in den Randbereichen (definiert durch die Kanäle 1 und 3). Der Mittelwert über den gesamten Strömungsbehälter der Strömungsgeschwindigkeit v₀ ist also ebenso groß wie der Mittelwert jeder einzelnen Strömungsgeschwindigkeit v₁, v₂ oder v₃ in den Kanälen 1, 2 und 3. Dadurch aber, dass der Strömungsbehälter in drei Einzelkanäle 1, 2 und 3 unterteilt ist, ergibt sich eine überraschend große Vergleichmäßigung der Strömungsgeschwindigkeiten über die Gesamtbreite des Strömungsbehälters. Diese Vergleichmäßigung führt zu den genannten erstaunlich guten Abscheidungsleistungen.

Die aus den Strömungskanälen 1, 2 und 3 kommende Flüssigkeit wird über eine relativ lange Strecke hin zusammengeführt und zu einem Auslauf 30 geleitet, der eine nach unten gezeigte Ablauföffnung 33 aufweist, welche die auslaufende Flüssigkeit (Wasser) über eine Umlenkung in ein Tauchrohr 32 und ein Auslaufrohr 31 leitet.

Es sei an dieser Stelle darauf hingewiesen, dass die Relativmaße des Strömungsbehälters 10 hinsichtlich der Länge und Breite gemäß Fig. 1 einschließlich der Dimensionierung der Leitwände 15 und 16 im Wesentlichen maßstabsgerecht (in Relativmaßen) in Fig. 1 gezeichnet sind.

Die Anordnung nach Fig. 2 unterscheidet sich von der nach Fig. 1 dadurch, dass Lochplatten 17, 18 und 19 vorgesehen sind, welche quer durch die Kanäle 1, 2 und 3 verlaufen und von der zu reinigenden Flüssigkeit durchströmt werden.
Im Bereich dieser Lochplatten 17, 18 und 19 ergibt sich eine weitere (erhöhte) Abscheidewirkung, wie dies schematisiert in Fig. 3 dargestellt ist. In Fig. 3 sind auch die Strömungsrichtungen mit Pfeilen angedeutet, wobei die unausgefüllten Doppelpfeile die Strömung der Flüssigkeit insgesamt und die einfach durchgezogenen Pfeile die Strömungsrichtung der aufsteigenden Leichtflüssigkeitströpfchen andeuten sollen.

An dieser Stelle sei nochmals unterstrichen, dass die besondere Dimensionierung der Anordnung, insbesondere die Breite der Strömungskanäle (ihre Maße wurden eingangs angegeben) einen wesentlichen Bestandteil der vorliegenden Erfindung darstellen.

### Bezugszeichenliste

- 1, 2, 3: Kanal
- 10: Strömungsbehälter
- 11, 11': Seitenwand
- 12: Vorderwand
- 13: Rückwand
- 14: Boden
- 15: Leitwand
- 16: Leitwand
- 17: Lochplatte
- 18: Lochplatte
- 19: Lochplatte
- 20: Einlauf
- 21: Zuleitung
- 22: Tauchleitung
- 23: Prallblech
- 24: Tauchwand
- 25: Unterrand
- 26: Durchlassschlitz
- 30: Auslauf
- 31: Auslaufrohr
- 32: Tauchrohr
- 33: Ablauföffnung
- B: Breite
- F: Flüssigkeitsspiegel

## Patentansprüche

1. Abscheider zum Abtrennen von Leichtflüssigkeit aus einem Öl, Wasser und ggf. Schlamm enthaltenden Gemisch, umfassend einen Strömungsbehälter (10), einen Einlauf (20) für das Gemisch und einen Auslauf (30), sowie zwei im Wesentlichen parallel zur Strömungsrichtung angeordnete Leitwände (15, 16), welche den Strömungsbehälter (10) in drei Kanäle (1, 2, 3) mit einer Breite (B) unterteilen, die zwischen 50 und 90 cm beträgt, wobei die Breite (B) aller Kanäle gleich ist,
und wobei die Leitwände derart im Wesentlichen vertikal angeordnet sind, dass sich eine Vergleichmäßigung der Strömungsgeschwindigkeiten ergibt.

2. Abscheider nach einem der vorhergehenden Ansprüche,
**dadurch gekennzeichnet, dass**
die Breite (B) 60 bis 80 cm, vorzugsweise 65 bis 75 cm beträgt.

3. Abscheider nach einem der vorhergehenden Ansprüche,
**dadurch gekennzeichnet, dass**
der Strömungsbehälter (10) im Bereich des Einlaufes (20) eine Tauchwand (24) umfasst, die den Strömungsbehälter (10) durchquert und deren Unterrand (25) einen Durchlassschlitz (26) zu einem Boden (14) des Strömungsbehälters (10) definiert, der das Gemisch mit im Wesentlichen gleicher Strömungsgeschwindigkeit in die drei Kanäle (1 bis 3) leitet.

4. Abscheider nach einem der vorhergehenden Ansprüche,
**dadurch gekennzeichnet, dass** die Tauchwand (24) 50 bis 90 cm, vorzugsweise 60 bis 80 cm, vorzugsweise 65 bis 75 cm von einer Vorderwand (12) des Strömungsbehälters (10) entfernt angeordnet ist.

5. Abscheider nach einem der vorhergehenden Ansprüche,
**dadurch gekennzeichnet, dass** die Länge der Leitwände (15, 16) in Strömungsrichtung gesehen 180 bis 260 cm, vorzugsweise 200 bis 240 cm, insbesondere aber 210 bis 230 cm beträgt.

6. Abscheider nach einem der vorhergehenden Ansprüche,
**dadurch gekennzeichnet, dass** die Länge des Strömungsbehälters (10) 420 bis 520, vorzugsweise 450 bis 490 cm, insbesondere aber 460 bis 480 cm beträgt.

7. Abscheider nach einem der vorhergehenden Ansprüche,
**dadurch gekennzeichnet, dass** in den Kanälen (1, 2, 3) quer zur Strömungsrichtung angeordnete Lochplatten (17 bis 19) vorgesehen sind.

## Claims

1. Separator for separating light liquid from a mixture containing oil, water, and possibly slurry, comprising
a flow container (10), an inlet (20) for the mixture, and an outlet (30), as well as two guide walls (15, 16) arranged substantially in parallel to the flow direction which divide the flow container (10) in three ducts (1, 2, 3) having a width (B) of between 50 and 90 cm, wherein the width (B) of all ducts is equal, and wherein the guide walls are arranged to be substantially vertical such that the flow velocities are made uniform as a result.

2. Separator according to any one of the preceding claims,
**characterized in that**
the width (B) is 60 to 80 cm, preferably 65 to 75 cm.

3. Separator according to any one of the preceding claims,
**characterized in that**
in the area of the inlet (20), the flow container (10) includes an immersion baffle (24) traversing the flow container (10) and the lower edge (25) thereof defining a passage slot (26) to a bottom (14) of the flow container (10), said slot guiding the mixture into the three ducts (1 to 3) at substantially equal flow velocity.

4. Separator according to any one of the preceding claims,
**characterized in that**
the immersion baffle (24) is arranged spaced from a front wall (12) of the flow container (10) by 50 to 90 cm, preferably 60 to 80 cm, preferably 65 to 75 cm.

5. Separator according to any one of the preceding claims,
**characterized in that**
the length of the guide walls (15, 16) as seen in the flow direction, is 180 to 260 cm, preferably 200 to 240 cm, optionally 210 to 230 cm.

6. Separator according to any one of the preceding claims,
**characterized in that**
the length of the flow container (10) is 420 to 520, preferably 450 to 490 cm, optionally 460 to 480 cm.

7. Separator according to any one of the preceding claims,
**characterized in that**
perforated plates (17 to 19) arranged transversely to the flow direction are provided in the ducts (1, 2, 3).

## Revendications

1. Séparateur pour séparer un liquide léger hors d'un mélange contenant du pétrole, de l'eau et éventuellement des boues, incluant un récipient d'écoulement (10), une entrée (20) pour le mélange et une sortie (30), ainsi que deux parois guides agencées sensiblement parallèlement à la direction d'écoulement (15, 16), lesquelles subdivisent le récipient d'écoulement (10) en trois canaux (1, 2, 3) avec une largeur (B) qui s'élève entre 50 et 90 centimètres, et la largeur (B) de tous les canaux est identique,
et dans lequel les parois guides sont agencées sensiblement verticalement de telle manière qu'il en résulte une régularisation des vitesses d'écoulement.

2. Séparateur selon l'une des revendications précédentes,
**caractérisé en ce que** la largeur (B) s'élève de 60 à 80 cm, de préférence de 65 à 75 cm.

3. Séparateur selon l'une des revendications précédentes,
**caractérisé en ce que** le récipient d'écoulement (10) inclut, dans la région de l'entrée (20), une paroi plongeante (24), qui traverse le récipient de mélange, et dont la bordure inférieure (25) définit une fente de traversée (26) vers un fond (14) du récipient d'écoulement (10), laquelle guide le mélange avec une vitesse d'écoulement sensiblement égale vers les trois canaux (1 à 3).

4. Séparateur selon l'une des revendications précédentes,
**caractérisé en ce que** la paroi plongeante (24) est agencée à une distance de 50 à 90 cm, de préférence de 60 à 80 cm, et de manière préférée de 65 à 75 cm depuis une paroi antérieure (12) du récipient d'écoulement (10).

5. Séparateur selon l'une des revendications précédentes,
**caractérisé en ce que** la longueur des parois de guidage (15, 16), vue en direction d'écoulement, s'élève de 180 à 260 cm, de préférence 200 à 240 cm, et en particulier 210 à 230 cm.

6. Séparateur selon l'une des revendications précédentes,
**caractérisé en ce que** la longueur du récipient d'écoulement (10) s'élève de 420 à 520 cm, de préférence 450 à 490 cm, et en particulier de 460 à 480 cm.

7. Séparateur selon l'une des revendications précédentes,
**caractérisé en ce qu'**il est prévu des plaques à trous (17 à 19) agencées dans les canaux (1, 2, 3) transversalement à la direction d'écoulement.
